# EUROPÄISCHE PATENTANMELDUNG

(11) **EP 1 629 878 A1**
(43) Veröffentlichungstag der Anmeldung: **01.03.2006**
(21) Anmeldenummer: 05015920.1
(22) Anmeldetag: 22.07.2005
(51) Int. Cl.: B01D 35/18, F01M 5/00, F01M 11/03, B01D 35/30

(54) **Schmiermittelfilter mit Wärmetauscher für Brennkraftmaschinen**

(30) Priorität: 24.08.2004 DE 102004040892
(71) Anmelder: Bayerische Motoren Werke Aktiengesellschaft, 80809 München (DE)
(72) Erfinder: Wimmer, Rudolf, 4431 Haidershofen (AT); Schedlberger, Reinhard, 4407 Steyr-Gleink (AT)

(57) **Zusammenfassung**

Schmiermittelfilter (1) für eine Brennkraftmaschine, der mit einem Wärmetauscher (2) in einem gemeinsamen Gehäuse (3) angeordnet ist, wobei das Gehäuse (3) mittels Befestigungselementen (4, 4') an der Brennkraftmaschine befestigbar ist und wobei zwischen der Brennkraftmaschine und dem Gehäuse (3) ein Flansch (2') des Wärmetauschers (2) angeordnet ist.

Die vorgeschlagene Ausgestaltung erlaubt eine gewichtsoptimierte Ausführung des Schmiermittelfilters.

## Beschreibung

Die Erfindung betrifft einen Schmiermittelfilter für eine Brennkraftmaschine mit den Merkmalen aus dem Oberbegriff des Patentanspruchs 1.

Sie geht von der deutschen Patentschrift DE 33 32 113 C3 aus. In dieser ist ein Schmiermittelfilter für eine Brennkraftmaschine beschrieben, der mit einem Wärmetauscher in einem gemeinsamen Gehäuse angeordnet ist. Zur Befestigung des Schmiermittelfilters an der Brennkraftmaschine ist eine Tragkonstruktion für das gemeinsame Gehäuse vorgesehen. Diese Tragkonstruktion wird mittels Befestigungselementen an der Brennkraftmaschine befestigt. Der Schmiermittelfilter ist über schmiermittelführende Bohrungen mit der Brennkraftmaschine, sowie mit dem Wärmetauscher verbunden. Der Wärmetauscher seinerseits ist über kühlmittelführende Bohrungen mit der Brennkraftmaschine verbunden.

Nachteilig bei der beschriebenen Ausgestaltung ist der massive Gehäuseaufbau, um eine dauerhafte Dichtheit an den Dichtstellen zwischen Tragkonstruktion und Brennkraftmaschine über lange Zeit zu gewährleisten.

Aufgabe der vorliegenden Erfindung ist es, einen gewichtsreduzierten, gattungsgemäßen Schmiermittelfilter aufzuzeigen.

Diese Aufgabe wird durch das Merkmal im kennzeichnenden Teil des Patentanspruchs 1 dadurch gelöst, dass die Tragkonstruktion von dem Wärmetauscher gebildet ist, wobei der Wärmetauscher aus einem ersten Material mit höherer Festigkeit als einem zweiten Gehäusematerial ist. In vorteilhafter Weise kann durch die erfindungsgemäße Ausgestaltung das Gehäuse aus einem weicheren, d. h. gemäß Patentanspruch 2 auch einem leichteren Material aufgebaut werden. Vorzugsweise wird ein Kunststoff für das Gehäuse verwendet, während der Wärmetauscher aus einem metallischen Werkstoff aufgebaut ist. Durch die vorgeschlagene Ausgestaltung nimmt der Wärmetauscher als steifes Element zur Stützung der axialen Abdichtungen zur Brennkraftmaschine bzw. zu einer Zwischenplatte alle auftretenden Flächenpressungen auf, wodurch das Filtergehäuse bezüglich der auftretenden Kräfte entlastet wird. Somit können axiale Abdichtungen am Gehäuse entfallen, bzw. reduziert werden, d. h. es werden nur kraftunkritische radiale Abdichtungen für das Gehäuse benötigt. Ferner ist durch die Ausgestaltung des Wärmetauschers aus einem Metall ein optimaler Wärmeübergang zwischen den zwei Medien Schmiermittel und Kühlmittel gewährleistet, während das Gehäuse gleichzeitig wärmeisolierend wirkt. Als weiterer Vorteil ist zu erwähnen, dass keine Kühlmittelführung an den Gehäusewänden aus Kunststoff stattfindet.

Die Ausgestaltung gemäß Patentanspruch 3 erlaubt eine rucksackähnliche Aufsetzmöglichkeit des Gehäuses auf den Flansch des Wärmetauschers. Dies führt zu einer nochmaligen Verbesserung der Dichtheit zwischen Gehäuse und Wärmetauscher.

Die Verwendung eines Abstandhalters gemäß Patentanspruch 4 erlaubt die Adaption ein und desgleichen Schmiermittelfilters an unterschiedliche Brennkraftmaschinen, da gemäß Patentanspruch 5 der Abstandshalter schmiermittel- und kühlmittelführende Bohrungen aufweist, die den Schmiermittel- bzw. Kühlmittelstrom innerhalb des Abstandshalters räumlich umleiten können.

Eine besonders bevorzugte Ausgestaltungsvariante ist die Anordnung eines Sperrventils gemäß Patentanspruch 6 in einer schmiermittelführenden Bohrung im Abstandshalter, da dies eine sehr Platz sparende Unterbringung des Sperrventils darstellt.

Eine bevorzugte Ausführungsform der Abdichtung von Kühlmittel- bzw. schmiermittelführenden Dichtungsstellen erfolgt gemäß Patentanspruch 7 mittels Blechrahmendichtungen, insbesondere bei der Ausführung ohne Abstandshalter. Diese zeichnen sich durch ihre besondere Langlebigkeit, auch bei wechselnden thermischen Einflüssen aus.

Die Verwendung eines Plattenwärmetauschers gemäß Patentanspruch 8 stellt eine bekannt robuste Bauart dar.

Im Folgenden wird ein bevorzugtes Ausführungsbeispiel in vier Figuren näher erläutert.
- Fig. 1: zeigt eine Explosionszeichnung eines erfindungsgemäßen Schmiermittelfilters;
- Fig. 2: zeigt die Aufsicht auf eine Anschlussseite des Schmiermittelfilters;
- Fig. 3: zeigt einen Schnitt durch den Schmiermittelfilter mit einem schematisch dargestellten Schmiermittelstrom;
- Fig. 4: zeigt ebenfalls einen Schnitt durch den Schmiermittelfilter mit einem schematisch dargestellten Kühlmittelstrom.

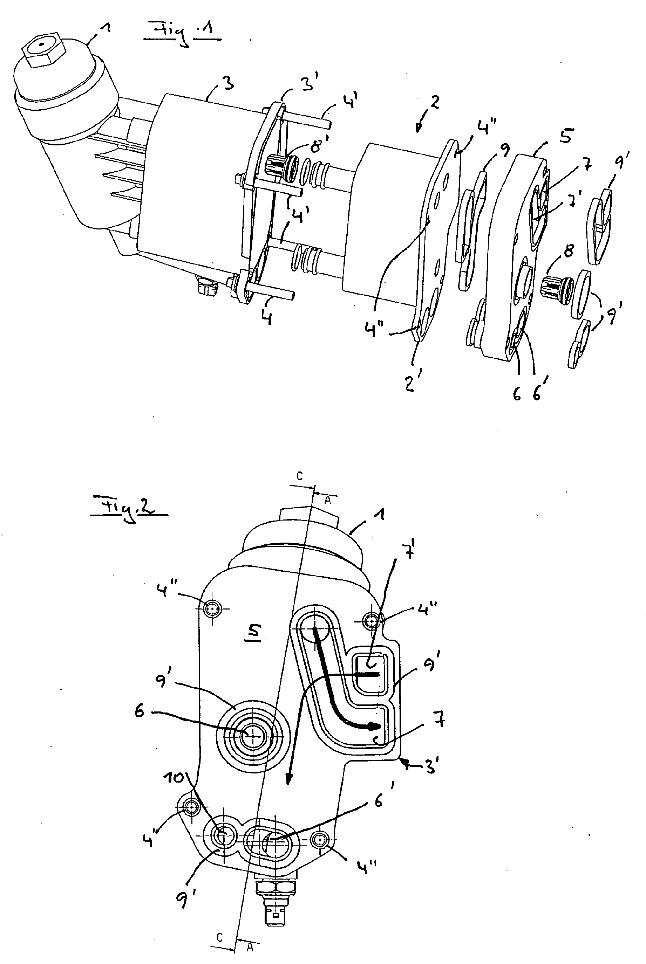

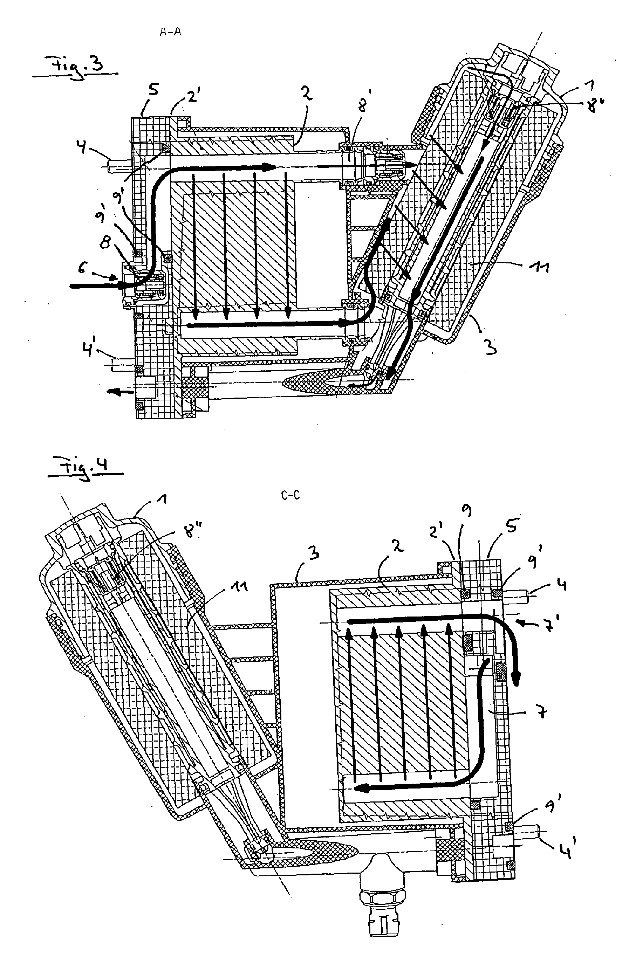

Fig. 1 zeigt eine Explosionszeichnung eines erfindungsgemäßen Schmiermittelfilters 1. Die Bezugszeichen aus Fig. 1 gelten für gleiche Bauteile auch für die Fig. 2 bis 4. Ein kastenförmiges Gehäuse 3 weist einerseits einen rucksackförmig aufgesetzten zylindrischen Fortsatz auf, in den ein Schmiermittelfilter 1, ein handelsüblicher Ölfilter, eingesetzt ist. In den kastenförmigen Teil des Gehäuses 3 wird ein Wärmetauscher 2, ein Plattenwärmetauscher, eingeschoben. Zur Lagefixierung des Wärmetauschers 2 weist dieser einen Montageflansch 2' auf. Ferner weist das Gehäuse 3 an seinem kastenförmigen Ende einen umlaufenden Falz auf, in den der Flansch 2' des Wärmetauschers 2 zur Befestigung des Gehäuses 3 eingelegt wird. Auf der, dem Gehäuse 3 abgewandten Seite des Flansches 2' kann ein Abstandshalter 5 aufgelegt werden, der zur Montage wiederum auf einer nicht dargestellten Brennkraftmaschine aufgelegt wird. Zwischen dem Abstandshalter 5 und dem Flansch 2' ist eine Blechrahmendichtung 9 angeordnet, um schmiermittelführende Bohrungen 6, 6' und kühlmittelführende Bohrungen 7, 7' abzudichten. Zwischen dem Abstandshalter 5 und dem Flansch 2' kann auch eine Profildichtung verwendet werden. Auch der Abstandshalter 5 weist korrespondierende schmiermittelführende Bohrungen 6, 6' sowie kühlmittelführende Bohrungen 7, 7' auf. Um schmiermittelführende Bohrungen 6, 6' und kühlmittelführende Bohrungen 7, 7' am Abstandshalter 5 abzudichten, werden diese Bohrungen 6, 6', 7, 7' ebenfalls mittels Blechrahmendichtungen 9, 9' abgedichtet. Ferner ist in einer schmiermittelführenden Bohrung 6 ein erstes Sperrventil 8 und in eine schmiermittelführende Bohrung des Wärmetauschers 2 ein zweites Sperrventil 8', beide sind Rückschlagventile, angeordnet. Die exakte Lage von Gehäuse 3, Wärmetauscher 2 und Schmiermittelfilter zueinander ergeben sich aus den Fig. 2 bis 4.

Beim Zusammenbau wird der Wärmetauscher 2 in den kastenförmigen Teil des Gehäuses 3 eingeschoben, bis der Flansch 2' und der Gehäuseflansch 3' bündig aufeinander liegen. Ferner liegt der Abstandshalter 5 flächenbündig auf dem Flansch 2'. Mit vier Befestigungselementen 4, 4', hier Schrauben, wird das Gehäuse 3 samt Abstandshalter 5 an die Brennkraftmaschine angeschraubt. Hierfür weisen sowohl der Gehäuseflansch 3' als auch der Flansch 2' und der Abstandshalter 5 zueinander korrespondierende Bohrungen 4" auf, durch die die Befestigungselemente 4, 4' gesteckt und an der Brennkraftmaschine befestigt werden.

Durch die erfindungsgemäße Ausgestaltung des Schmiermittelfilters 1 werden sämtliche mit Druck beaufschlagte Flächen von dem Wärmetauscher 2 aufgenommen, während das Gehäuse 3 nur noch eine nebengeordnete radiale Dichtfunktion erfüllt. Somit kann das Gehäuse 3 aus einem leichten bzw. weichen Werkstoff gefertigt werden, wodurch das Bauteilgewicht wesentlich reduziert wird. Darüber hinaus weist das Gehäuse 3 in vorteilhafter Weise keine kühlmittelführenden Oberflächen auf, wodurch ein kostengünstiger Kunststoff verwendet werden kann, während der Wärmetauscher 2 aus einem gut Wärme leitenden metallischen Werkstoff ist.

Im Folgenden ist die Funktionsweise der baulichen Einheit anhand der Fig. 2 bis 4 näher erläutert.

Fig. 2 zeigt eine Aufsicht auf die Anschlussseite des Schmiermittelfilters 1. Erkennbar ist die Montageseite des Abstandshalters 5. Im Randbereich des Gehäuseflanschs 3' sind die Befestigungsbohrungen 4" erkennbar. In etwa zentral im Abstandshalter 5 ist eine schmiermittelführende Bohrung 6 dargestellt, der Schmiermittelzulauf. Unterhalb der schmiermittelführenden Bohrung 6 ist eine weitere schmiermittelführende Bohrung 6' erkennbar, der Schmiermittelaustritt. Neben der schmiermittelführenden Bohrung 6' ist ein separater Schmiermittelablauf 10 angeordnet. Dieser kann beispielsweise für Servicezwecke verwendet werden. In etwa diametral zu dem separaten Schmiermittelablauf 10 sind die kühlmittelführenden Bohrungen 7, 7' angeordnet. Mit Pfeilen ist die Fließrichtung des Kühlmittels dargestellt. Die schmiermittelführenden Bohrungen 6, 6' und der separate Schmiermittelablauf 10 sind jeweils von Blechrahmendichtungen 9, 9' eingerahmt. In weiteren Ausführungsbeispielen können auch Profildichtungen verwendet werden.

Darüber hinaus sind zwei Schnitte A-A und C-C in etwa entlang der Längsachse des Schmiermittelfilters 1 dargestellt. Der Schnitt A-A ist weiter in Fig. 3 und der Schnitt C-C in Fig. 4 erläutert.

Fig. 3 zeigt den Schnitt A-A durch den Schmiermittelfilter 1, sowie mit Pfeilen dargestellt den Schmiermittelfluss durch den Schmiermittelfilter 1. Von der Brennkraftmaschine kommend fließt das Schmiermittel zuerst durch das erste Sperrventil 8 in die schmiermittelführende Bohrung 6 des Abstandshalters 5. Von dort gelangt das Schmiermittel in den Wärmetauscher 2, wobei sich der Schmiermittelfluss in zwei Teilströme aufteilen kann. Ein Teilstrom fließt durch den Wärmetauscher 2, der wie bereits erwähnt ein Plattenwärmetauscher ist. Der Schmiermittelteilstrom, der den Wärmetauscher passiert, gelangt an den radialen Außenumfang einer Filterpatrone 11 des Schmiermittelfilters 1. Der zweite Schmiermittelteilstrom, der den Wärmetauscher umgeht, hierbei handelt es sich um eine Sicherheitsfunktion, gelangt über das zweite Sperrventil 8' ebenfalls an den radialen Außenumfang der Filterpatrone 11. Durch den Schmiermitteldruck wird das Schmiermittel durch die Filterpatrone 11 in eine axiale Bohrung in der Filterpatrone 11 gedrückt, die wiederum einerseits durch ein drittes Sperrventil 8" verschlossen ist. Bei Verschluss der Filterpatrone 11 gelangt der radial am Außenumfang der Filterpatrone 11 gesammelte Schmiermittelstrom somit durch das dritte Sperrventil 8" ebenfalls in die axiale Bohrung, von wo es in die Brennkraftmaschine zurückgefördert wird.

In Fig. 4 ist der Schnitt C-C dargestellt, sowie mit Pfeilen der schematisch dargestellte Kühlmittelfluss. Da die Schmiermittelführung bereits unter Fig. 3 erläutert wurde, wird auf diese in Fig. 4 nicht mehr eingegangen. In Fig. 4 ist ebenfalls wieder der Abstandshalter 5 dargestellt, mit den kühlmittelführenden Bohrungen 7, 7', die sich in dem Wärmetauscher 2 fortsetzen. Von der Brennkraftmaschine 7 kommend gelangt das Kühlmittel durch die in Fig. 2 erkennbare kühlmittelführende Bohrung 7 in den Wärmetauscher 2. Von dort durchströmt das Kühlmittel die Platten des Wärmetauschers 2, um über die kühlmittelführende Bohrung 7' den Wärmetauscher wieder in Richtung Brennkraftmaschine zu verlassen.

Schmiermittelstrom und Kühlmittelstrom im Wärmetauscher 2 sind im Gegenstromprinzip ausgeführt, um einen optimalen Wärmeübergang zu erzielen. Während Wärmetauscher 2 aus einem Metall hergestellt ist, bestehen das Gehäuse 3 und der Abstandshalter 5 aus einem wesentlich leichteren Kunststoff. Selbstverständlich können auch andere leichtere Materialien hierfür vorgesehen werden. Durch die Nutzung des Wärmetauschers als steifes Element zur Stützung der axialen Abdichtungen zur Brennkraftmaschine bzw. zum Abstandshalter, führt dies zu einer kraftmäßigen Entlastung des Gehäuses 3. Somit können die axialen Abdichtungen zum Gehäuse 3 entfallen, wodurch nur radiale Abdichtungen für das Gehäuse 3 notwendig sind. Während das Ausführungsbeispiel einen Abstandshalter 5 aufweist, kann dieser in anderen Ausführungsbeispielen entfallen. Somit wird ein noch leichterer und einfacherer Aufbau des Schmiermittelfilters 1 erzielt. In diesem Fall wird der Schmiermittelfilter 1 direkt an der Brennkraftmaschine befestigt. Als Dichtelemente zum Abdichten der schmiermittelführenden Bohrungen 6, 6' und der kühlmittelführenden Bohrungen 7, 7' werden vorzugsweise Blechrahmendichtungen verwendet.

### Bezugszeichenliste:

- 1.: Schmiermittelfilter
- 2.: Wärmetauscher
- 2': Montageflansch
- 3.: Gehäuse
- 3': Gehäuseflansch
- 4, 4': Befestigungselement
- 5.: Abstandshalter
- 6, 6': Schmiermittelführende Bohrung
- 7, 7': Kühlmittelführende Bohrung
- 8, 8', 8": Sperrventil
- 9, 9': Blechrahmendichtung
- 10.: Schmiermittelablauf
- 11.: Filterpatrone

## Patentansprüche

1. Schmiermittelfilter (1) für eine Brennkraftmaschine, der mit einem Wärmetauscher (2) in einem gemeinsamen Gehäuse (3) angeordnet ist,
**dadurch gekennzeichnet, dass** das Gehäuse (3) mittels Befestigungselementen (4, 4') an der Brennkraftmaschine befestigbar ist, wobei zwischen der Brennkraftmaschine und dem Gehäuse (3) ein Flansch (2') des Wärmetauschers (2) angeordnet ist.

2. Schmiermittelfilter nach Patentanspruch 1,
**dadurch gekennzeichnet, dass** der Wärmetauscher (2) aus einem härteren Material als das Gehäuse ist.

3. Schmiermittelfilter nach Patentanspruch 2,
**dadurch gekennzeichnet, dass** das Gehäuse (3) aus einem Kunststoff ist.

4. Schmiermittelfilter nach einem der Patentansprüche 1 bis 3,
**dadurch gekennzeichnet, dass** zwischen dem Wärmetauscher (2) und der Brennkraftmaschine ein Abstandshalter (5) angeordnet ist.

5. Schmiermittelfilter nach Patentanspruch 4,
**dadurch gekennzeichnet, dass** in dem Abstandshalter (5) fluidführende Bohrungen (6, 6', 7, 7') angeordnet sind.

6. Schmiermittelfilter nach einem der zuvor genannten Patentansprüche,
**dadurch gekennzeichnet, dass** der Wärmetauscher (2) und der Abstandshalter (5) von einem Schmiermittel in Schmiermittelführenden Bohrungen (6, 6') und von einem Kühlmittel in Kühlmittelführenden Bohrungen (7, 7') durchströmbar sind.

7. Schmiermittelfilter nach einem der Patentansprüche 4 bis 6,
**dadurch gekennzeichnet, dass** zwischen dem Wärmetauscher (2) und der Brennkraftmaschine und/oder dem Wärmetauscher (2) und dem Abstandshalter (5) und/oder dem Abstandshalter (5) und der Brennkraftmaschine eine Blechrahmendichtung (9, 9') angeordnet ist.

8. Schmiermittelfilter nach einem der Patentansprüche 4 bis 7,
**dadurch gekennzeichnet, dass** in einer Schmiermittelführenden Bohrung (6, 6') in dem Abstandshalter (5) ein Sperrventil (8, 8', 8") angeordnet ist.

9. Schmiermittelfilter nach einem Patentanspruch 8,
**dadurch gekennzeichnet, dass** das Sperrventil (8, 8', 8") ein Rückschlagsperrventil ist.

10. Schmiermittelfilter nach einem der zuvor genannten Patentansprüche,
**dadurch gekennzeichnet, dass** der Wärmetauscher (2) ein Plattenwärmetauscher ist.
